# EUROPÄISCHE PATENTANMELDUNG

(11) **EP 1 500 533 A1**
(43) Veröffentlichungstag der Anmeldung: **26.01.2005**
(21) Anmeldenummer: 03291826.0
(22) Anmeldetag: 23.07.2003
(51) Int. Cl.: B60H 1/00

(54) **Klimaanlage eines Kraftfahrzeugs mit einem Master- und einem Slave-Gebläse**

(71) Anmelder: Behr France S.A.R.L., 68250 Rouffach (FR)
(72) Erfinder: Delamarche, Jean-Luc, 68520 Burnhaupt le bas (FR)
(74) Vertreter: Grauel, Andreas, Dr.

(57) **Zusammenfassung**

Die Erfindung betrifft eine Klimaanlage eines Kraftfahrzeuges mit mindestens zwei in ihrer Drehzahl regelbaren Gebläsen zur Förderung von klimatisierter Luft.

Es wird vorgeschlagen, dass zwei Gebläsen, nämlich einem so genannten master-Gebläse und einem so genannten slave-Gebläse, ein (Zahlwort) Gebläseregler, ein so genannter master-Gebläseregler, zugeordnet ist.

## Beschreibung

Die Erfindung betrifft eine Klimaanlage eines Kraftfahrzeuges mit mindestens zwei in ihrer Drehzahl regelbaren Gebläsen zur Förderung von klimatisierter Luft.

Gebläse in Kraftfahrzeugklimaanlagen haben die Aufgabe, klimatisierte Luft in den Fahrzeuginnenraum zu fördern. Sie werden durch einen Elektromotor angetrieben und sind zur Regelung der geförderten Luftmenge in ihrer Drehzahl regelbar. Jedes Gebläse ist daher mit einem an sich bekannten Gebläseregler ausgestattet, mit dem die Spannung am Elektromotor regelbar ist. Für die Klimatisierung von Kraftfahrzeugen, insbesondere der gehobenen Klasse oder bei Vans (Großraumlimousinen) werden mehrere Gebläse benötigt, wobei diese Gebläse an unterschiedlichen Stellen im Kraftfahrzeug angeordnet sein können. Beispielsweise kann eine frontseitige Klimaanlage zwei Gebläse aufweisen, oder eine heckseitige Klimaanlage für die Klimatisierung des Wagenfonds kann mit zwei Gebläsen ausgestattet sein. Darüber hinaus werden oft Hilfsgebläse, so genannte booster-Gebläse im Fahrzeuginnenraum angeordnet, um die Luft gleichmäßig im Fahrzeug zu verteilen. Schließlich kann - wie aus der DE-A 198 51 907 bekannt - sowohl im frontseitigen als auch im fondseitigen Teil einer Klimaanlage je ein Gebläse angeordnet sein. Diese Gebläse sind jeweils mit einem eigenen Gebläseregler ausgestattet, was die Kosten des Gebläses bzw. der Klimaanlage und den Regelungsaufwand erhöht.

Es ist Aufgabe der vorliegenden Erfindung, bei einer Klimaanlage der eingangs genannten Art die Kosten für die Klimaanlage' und insbesondere für die Gebläse zu senken.

Diese Aufgabe wird durch die Merkmale des Patentanspruches 1 gelöst. Erfindungsgemäß ist jeweils zwei Gebläsen ein Gebläseregler zugeordnet. Dabei ist jeweils ein Gebläse als so genanntes master-Gebläse (Hauptgebläse) und das andere als so genanntes slave-Gebläse (Nebengebläse) ausgebildet, und das master-Gebläse weist einen so genannten master-Gebläseregler auf. Damit wird der Vorteil erreicht, dass für zwei Gebläse nur ein Gebläseregler verwendet wird, was die Kosten und auch das Gewicht für die Klimaanlage senkt.

In vorteilhafter Ausgestaltung der Erfindung ist die Spannung am slave-Gebläse gleich der Spannung am master-Gebläse. Das slave-Gebläse ist dem master-Gebläse somit parallel geschaltet, sodass die Regelung am master-Gebläseregler parallel und eins zu eins auf das Nebengebläse übertragen wird. Dieses läuft somit - gleiche Belastung vorausgesetzt - synchron mit dem Hauptgebläse.

In vorteilhafter Ausgestaltung der Erfindung sind die beiden Gebläse, das master- und das slave-Gebläse, in einer Heckanlage für die Klimatisierung des Fonds angeordnet. Das Fahrzeug weist also zusätzlich noch eine Hauptklimaanlage auf, die im Frontbereich angeordnet ist und den vorderen Fahrzeuginnenraum klimatisiert. Die Heckanlage kann somit mit zwei Gebläsen, die beispielsweise die rechte und linke Fahrzeugseite des Fond mit klimatisierter Luft versorgen, ausgestattet werden, benötigt allerdings nur einen Gebläseregler.

Nach einer weiteren vorteilhaften Ausgestaltung der Erfindung ist ein Gebläse, das master-Gebläse, in einer frontseitigen Klimaanlage angeordnet, und das zweite Gebläse ist als so genanntes booster-Gebläse (Hilfsgebläse) für eine Zusatzklimatisierung ausgebildet. Für diesen Zweck sind im Fahrzeuginnenraum Luftleitungen mit Luftdüsen verlegt, vor denen die booster-Gebläse angeordnet sind. Diese Hilfsgebläse benötigen somit keinen Gebläseregler, was aufgrund der beschränkten Einbausituation hier besonders vorteilhaft ist.

Die Erfindung ist nicht auf Klimaanlagen beschränkt, sondern gilt ebenso für Heizungsanlagen, wo dieselben Vorteile erreicht werden.

Ausführungsbeispiele der Erfindung sind in der Zeichnung dargestellt und werden im Folgenden näher beschrieben. Es zeigen
- Fig. 1: einen Fahrzeuginnenraum in schematischer Darstellung mit Heckanlage,
- Fig. 2: einen Fahrzeuginnenraum mit Zwei-Zonenklimatisierung und booster-Gebläse und
- Fig. 3: eine Zusatzklimatisierung mit einem booster-Gebläse.

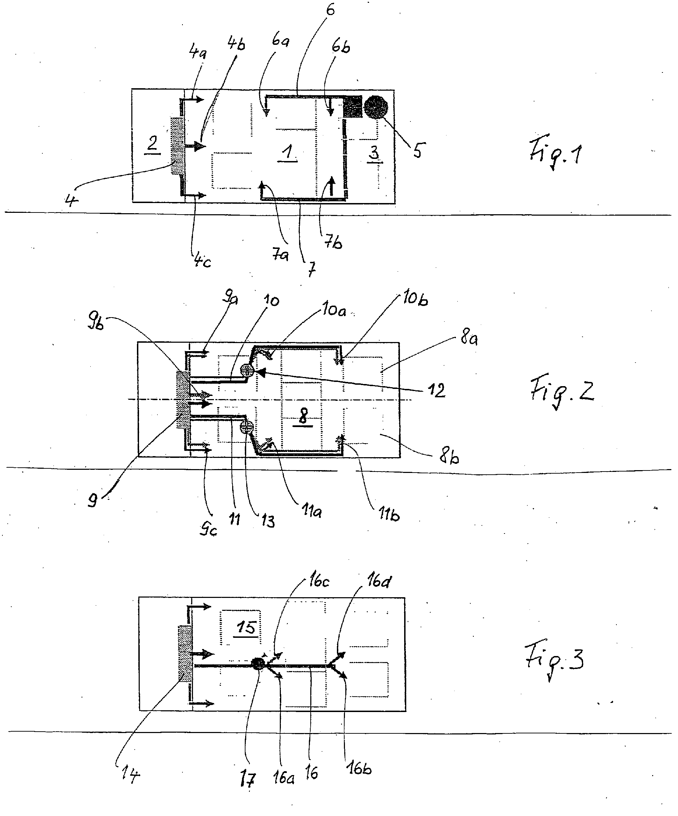

**Fig. 1** zeigt einen Fahrzeuginnenraum 1, einen Frontbereich 2 und einen Heckbereich 3 eines Kraftfahrzeuges. Im Frontbereich 2 ist eine Hauptklimaanlage 4 mit Luftauslässen 4a, 4b, 4c angeordnet. Im Heckbereich 3 ist eine Heckanlage 5 angeordnet, die zwei nicht dargestellte Gebläse aufweist. Die Gebläse fördern die durch die Heckanlage 5 klimatisierte Luft durch Luftleitungen 6 mit den Luftauslässen 6a, 6b und die Luftleitung 7 mit den Luftauslässen 7a, 7b in den Fahrzeuginnenraum 1. Der gesamte Fahrzeuginnenraum 1 wird somit in seinem vorderen Bereich durch die Klimaanlage 4 und in seinem Fondbereich durch die Heckanlage 5 klimatisiert. Die beiden in der Heckanlage 5 angeordneten nicht dargestellten Gebläse weisen nur einen Gebläseregler auf, das zweite Gebläse läuft mit gleicher Spannung wie das erste.

Das erste Gebläse ist ein so genanntes master-Gebläse (Hauptgebläse), welches mit einem nicht dargestellten Gebläseregler, einem so genannten master-Gebläseregler arbeitet, der an sich bekannt ist. Das zweite Gebläse ist ein so genanntes slave-Gebläse (Nebengebläse), welches keinen Gebläseregler aufweist, sondern spannungsmäßig an das master-Gebläse gekoppelt, d. h. mit diesem parallel geschaltet ist. Die Drehzahlregelung durch den master-Gebläseregler wird somit direkt auf das slave-Gebläse übertragen.

**Fig. 2** zeigt ein weiteres Ausführungsbeispiel der Erfindung, nämlich einen Fahrzeuginnenraum 8, der (in Fahrtrichtung gesehen) in eine rechte und eine linke Zone 8a, 8b aufgeteilt ist. Frontseitig ist eine Klimaanlage 9 mit drei Luftauslässen 9a, 9b, 9c vorgesehen. Zusätzlich sind von der Klimaanlage 9 ausgehende Luftleitungen 10, 11 vorgesehen und im Fahrzeuginnenraum 8 verlegt. Die Luftleitung 10 weist ein Hilfs- oder booster-Gebläse 12 auf und ist in der rechten Zone 8a angeordnet, während die Luftleitung 11 ein booster-Gebläse 13 aufweist und in der linken Zone 8b angeordnet ist. Die Luftleitungen 10, 11 weisen Luftauslässe 10a, 10b sowie 11a, 11b auf, über welche die klimatisierte und über die booster-Gebläse 12, 13 geförderte Luft in den Fahrzeuginnenraum 8 gelangt. Jedem booster-Gebläse 12, 13 ist in der Klimaanlage 9 ein nicht dargestelltes master-Gebläse zugeordnet, welches einen ebenfalls nicht dargestellten master-Gebläseregle,r aufweist, d. h. die beiden booster-Gebläse 12, 13 weisen keinen Gebläseregler auf, sondern werden mit gleicher Spannung wie die ihnen zugeordneten master-Gebläse betrieben.

**Fig. 3** zeigt ein weiteres Ausführungsbeispiel der Erfindung mit einer frontseitigen Klimaanlage 14 für einen Fahrzeuginnenraum 15, in dessen mittlerem Bereich ein Luftverteilstrang 16 mit einem booster-Gebläse 17 angeordnet ist. Der Luftverteilstrang 16 weist Luftaustrittsöffnungen 16a, 16b, 16c, 16d auf, über welche der Fahrzeuginnenraum 15 mit klimatisierter durch das booster-Gebläse 17 geförderte Luft versorgt wird. Das booster-Gebläse weist keinen Gebläseregler auf, ihm ist ein nicht dargestelltes master-Gebläse in der frontseitigen Klimaanlage 14 zugeordnet, welches einen nicht dargestellten master-Gebläseregler aufweist. Auch hier ist somit für zwei Gebläse nur ein Gebläseregler notwendig.

## Patentansprüche

1. Klimaanlage eines Kraftfahrzeuges mit mindestens zwei in ihrer Drehzahl regelbaren Gebläsen zur Förderung von klimatisierter Luft, **dadurch gekennzeichnet, dass** zwei Gebläsen, nämlich einem so genannten master-Gebläse und einem so genannten slave-Gebläse (12, 13, 17), ein (Zahlwort) Gebläseregler, ein so genannter master-Gebläseregler, zugeordnet ist.

2. Klimaanlage nach Anspruch 1, **dadurch gekennzeichnet, dass** die Spannung am slave-Gebläse (12, 13, 17) gleich der Spannung am master-Gebläse ist.

3. Klimaanlage nach Anspruch 1 oder 2, **dadurch gekennzeichnet, dass** die Gebläse in einer Heckanlage (5) angeordnet sind.

4. Klimaanlage nach Anspruch 1 oder 2, **dadurch gekennzeichnet, dass** das master-Gebläse in einer Frontklimaanlage (9, 14) angeordnet und das slave-Gebläse als Hilfsgebläse (12, 13, 17), so genanntes booster-Gebläse für eine Zusatzklimatisierung (10, 11, 16) ausgebildet ist.
